(19) Europäisches Patentamt
European Patent Office
Office européen des brevets

(11) **EP 3 432 036 A1**

(12) **EUROPEAN PATENT APPLICATION**
published in accordance with Art. 153(4) EPC

(43) Date of publication:
**23.01.2019 Bulletin 2019/04**

(21) Application number: **17766084.2**

(22) Date of filing: **30.01.2017**

(51) Int Cl.:
**G01V 1/00** (2006.01)   **G01H 1/00** (2006.01)

(86) International application number:
**PCT/JP2017/003183**

(87) International publication number:
**WO 2017/159076 (21.09.2017 Gazette 2017/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **14.03.2016 JP 2016049276**

(71) Applicants:
• **Omron Corporation**
  **Kyoto-shi, Kyoto 600-8530 (JP)**
• **Tokyo Gas Co., Ltd.**
  **Tokyo 105-8527 (JP)**

(72) Inventors:
• **SAKUMA, Hirohisa**
  **Tokyo 105-8527 (JP)**
• **UEDA, Naotsugu**
  **Kyoto-shi**
  **Kyoto 600-8530 (JP)**
• **MINO, Hiroyuki**
  **Kyoto-shi**
  **Kyoto 600-8530 (JP)**

(74) Representative: **Horn Kleimann Waitzhofer**
**Patentanwälte PartG mbB**
**Ganghoferstrasse 29a**
**80339 München (DE)**

(54) **SEISMIC SENSOR AND EARTHQUAKE DETECTION METHOD**

(57) A seismic sensor detects an earthquake with at least a predetermined magnitude and outputs a predetermined signal. The sensor includes an acceleration measurement unit that measures an acceleration applied to the seismic sensor, a velocity calculation unit that calculates a velocity response value using the acceleration measured by the acceleration measurement unit, an earthquake determination unit that determines whether the velocity response value is greater than or equal to a predetermined threshold, and an output unit that outputs the predetermined signal when the velocity response value is determined to be greater than or equal to the predetermined threshold.

FIG. 3

EARTHQUAKE SENSING

OBTAIN ACCELERATION — S1

DECOMPOSE ACCELERATION INTO FREQUENCY COMPONENTS — S2

CALCULATE VELOCITY RESPONSE VALUE — S3

RESPONSE VELOCITY ≥ THRESHOLD? — S4    NO

YES

OUTPUT SIGNAL — S5

**Description**

FIELD

The present invention relates to a seismic sensor and an earthquake detection method.

BACKGROUND

Seismic sensors have been developed to measure an acceleration and output a shut-off command in response to seismic sensing.

CITATION LIST

PATENT LITERATURE

Patent Literature 1: Japanese Unexamined Patent Application Publication No. 2000-205921

SUMMARY

TECHNICAL PROBLEM

Earthquake determination using an acceleration for accurately determining an earthquake and generating a warning, stopping the equipment, or shutting off the energy supply may be affected by vibrations from, for example, noise contained in the installation environment.
One or more aspects of the present invention are directed to a seismic sensor that accurately detects earthquake vibrations.

SOLUTION TO PROBLEM

A seismic sensor according to one aspect of the present invention detects an earthquake with at least a predetermined magnitude and outputs a predetermined signal. The seismic sensor includes an acceleration measurement unit that measures an acceleration applied to the seismic sensor, a velocity calculation unit that calculates a velocity response value using the acceleration measured by the acceleration measurement unit, an earthquake determination unit that determines whether the velocity response value is greater than or equal to a predetermined threshold, and an output unit that outputs the predetermined signal when the velocity response value is determined to be greater than or equal to the predetermined threshold.
This seismic sensor determines an earthquake based on a velocity response value, and can exclude, from its earthquake determination, vibrations from, for example, noise contained in the acceleration.
The velocity calculation unit may calculate a velocity response value obtained by decomposing the acceleration into frequency components. The earthquake determination unit may determine whether the velocity response value calculated for a specific frequency is greater than or equal to a predetermined threshold set for the specific frequency. For example, the specific frequency may be the natural frequency of a structure. This allows the seismic sensor to output a predetermined signal when detecting vibrations including a predominant period that may cause resonance with the structure and thus damage to the structure.
The earthquake determination unit may further use the acceleration measured by the acceleration measurement unit for determination. This improves the accuracy of earthquake determination.
The predetermined threshold set for the specific frequency may be a value that allows detection of a sine wave with a period of 0.3 seconds and a maximum acceleration of 250 gal. Typically, when detecting a wavelength with a period of 0.3 seconds and a maximum acceleration of 250 gal or higher, the sensor may detect an earthquake and stop the equipment or the energy supply.
An earthquake detection method according to another aspect of the present invention includes measuring an acceleration, calculating a velocity response value using the acceleration, determining whether the velocity response value is greater than or equal to a predetermined threshold, and outputting a predetermined signal when the velocity response value is determined to be greater than or equal to the predetermined threshold. The method may be implemented by a sensor module.
This earthquake detection method allows determination of an earthquake based on a velocity response value, and can exclude, from its earthquake determination, vibrations from, for example, noise contained in the acceleration.
The aspects in the solution to problem section may be combined to the maximum extent possible without departing from an object and the technical idea of the present invention.

ADVANTAGEOUS EFFECTS

The seismic sensor according to the above aspects can accurately detect earthquake vibrations.

BRIEF DESCRIPTION OF THE DRAWINGS

Fig. 1 is a block diagram of an example seismic sensor.
Fig. 2 is a functional block diagram of an example seismic sensor.
Fig. 3 is a flowchart showing an example earthquake sensing process.
Fig. 4 is a graph showing example acceleration values.
Fig. 5 is a graph showing example velocity response values.
Fig. 6 is a functional block diagram of a seismic sensor according to a modification.
Fig. 7 is a flowchart showing an earthquake sensing process according to the modification.
Fig. 8 is a graph showing example velocity response values.
Fig. 9 shows an example spectral distribution of maximum velocity response values for natural periods at a certain time.

DETAILED DESCRIPTION

A seismic sensor according to one or more embodiments of the present invention will now be described with reference to the drawings. The embodiments described below are mere examples of the seismic sensor, and the seismic sensor according to the embodiments of the present invention is not limited to the structure described below.

Device Structure

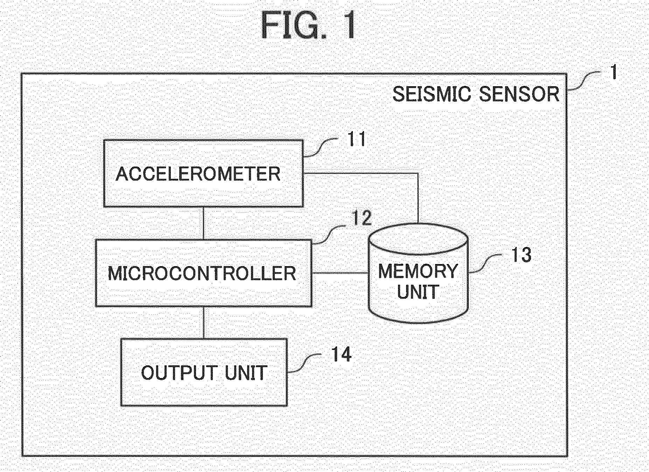

Fig. 1 is a block diagram showing an example seismic sensor according to the present embodiment. A seismic sensor 1 is a sensor module including an accelerometer 11, a microcontroller 12, a memory unit 13, and an output unit 14.
The accelerometer 11 is, for example, a piezoelectric acceleration sensor or an acceleration sensor for detecting the capacitance between electrodes, and continuously measures an acceleration applied to the accelerometer 11. The acceleration measured by the accelerometer 11 is output to the microcontroller 12.
The microcontroller 12 is, for example, a general-purpose integrated circuit. The microcontroller 12 obtains the acceleration measured by the accelerometer 11 at predetermined intervals, and detects an earthquake based on a velocity response value calculated by integrating the acceleration.
The memory unit 13 is a temporary memory device such as a random access memory (RAM), or a nonvolatile memory such as an erasable programmable read-only memory (EPROM), and stores values including measured acceleration values and thresholds used for earthquake determination. The memory unit 13 may be a memory incorporated in the accelerometer 11 or the microcontroller 12.
The output unit 14 is, for example, an output terminal included in the microcontroller 12. When, for example, the microcontroller 12 determines that an earthquake has occurred, the microcontroller 12 outputs information indicating, for example, the occurrence of the earthquake to another apparatus through the output unit 14.
The seismic sensor 1 may include a high-pass filer (not shown) to remove gravity components between the accelerometer 11 and the microcontroller 12. The microcontroller 12 may also convert the acceleration measured by the accelerometer 11 into the absolute value of the acceleration based on a predetermined offset.

Functional Components

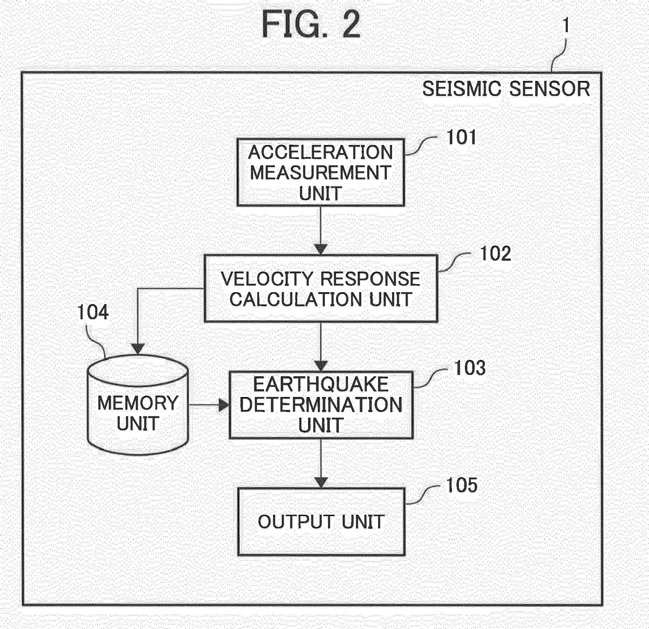

Fig. 2 is a functional block diagram of an example of the seismic sensor 1. The seismic sensor 1 includes an acceleration measurement unit 101, a velocity response calculation unit 102, an earthquake determination unit 103, a memory unit 104, and an output unit 105. The acceleration measurement unit 101, the velocity response calculation unit 102, and the earthquake determination unit 103 are implemented by the accelerometer 11 and the microcontroller 12 shown in Fig. 1 operating in accordance with a predetermined program. The memory unit 104 corresponds to the memory unit 13 shown in Fig. 1. The output unit 105 is implemented by the microcontroller 12 and the output unit 14 shown in Fig. 1 operating in accordance with a predetermined program.
The acceleration measurement unit 101 continuously measures the acceleration applied to the accelerometer 11 at predetermined intervals. More specifically, the acceleration measurement unit 101 measures the acceleration caused by, for example, vibrations at the installation site of the seismic sensor 1. The velocity response calculation unit 102 calculates a velocity response value using the acceleration. More specifically, the velocity response calculation unit 102 integrates the acceleration measured by the acceleration measurement unit 101 to calculate the velocity response value within a predetermined frequency band of the vibrations.

The earthquake determination unit 103 determines an earthquake based on the velocity response value. The memory unit 104 prestores a threshold to be compared with the velocity response value. In the present embodiment, the velocity response value may be used instead of or in addition to an acceleration to accurately determine whether an earthquake has occurred.

The output unit 105 outputs a signal indicating, for example, that an earthquake with at least a predetermined magnitude has been detected. The output unit 105 may also output signals for stopping the supply of energy such as gas or stopping the equipment.

Earthquake Sensing Process

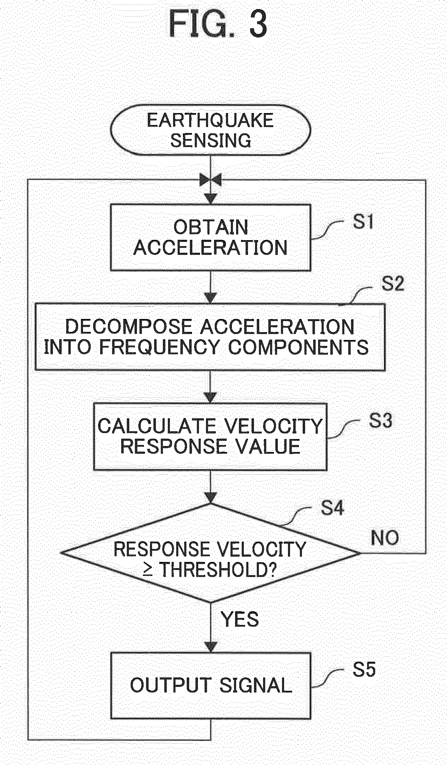

Fig. 3 is a flowchart showing an example earthquake sensing process.

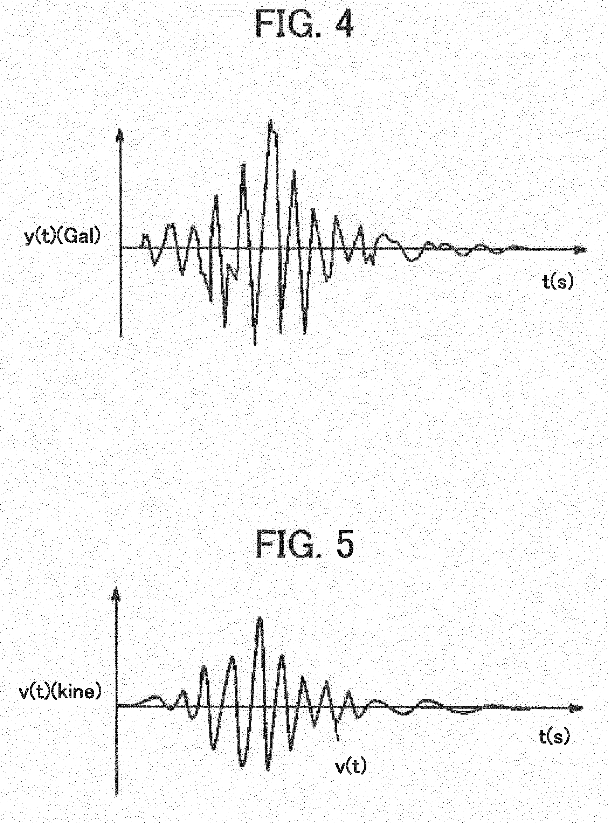

The acceleration measurement unit 101 in the seismic sensor 1 obtains the acceleration applied to a structure such as a building in which the seismic sensor 1 is installed (step S1 in Fig. 3). In this step, the acceleration measurement unit 101 obtains a value indicating the acceleration measured with the accelerometer 11. Although step S1 is a single step in the flowchart, the acceleration measurement unit 101 continuously obtains the acceleration. For example, the acceleration values shown in Fig. 4 are obtained. Fig. 4 is a graph showing time t (s) on the horizontal axis and acceleration y(t) (Gal) on the vertical axis.

The velocity response calculation unit 102 in the seismic sensor 1 decomposes the obtained acceleration into frequency components (step S2). The velocity response calculation unit 102 then calculates velocity response values using the acceleration for each frequency component resulting from the decomposition (step S3). In this step, the velocity response calculation unit 102 integrates the acceleration for a predetermined period starting from the detection of vibrations to calculate the velocity response value. For example, the velocity response values shown in Fig. 5 are calculated. Fig. 5 is a graph showing time t (s) on the horizontal axis and the velocity response value v(t) (kine) on the vertical axis. Steps S2 and S3 may be performed in the reversed order to calculate velocity response values first and then perform the frequency decomposition. The processing in step S2 and subsequent steps may be repeated using the acceleration measured within a predetermined period preceding the processing. When the obtained acceleration is greater than or equal to a predetermined threshold, the sensor may return from its idle state to perform the processing using the acceleration measured within a predetermined period.

The earthquake determination unit 103 in the seismic sensor 1 then determines whether to output a signal indicating that an earthquake greater than a predetermined magnitude has been detected (step S4). More specifically, the earthquake determination unit 103 determines whether any of the velocity response values obtained for each frequency component resulting from the frequency decomposition is greater than or equal to a predetermined threshold. In other words, the earthquake determination unit 103 determines whether each of the velocity response values calculated for all the frequencies within the above frequency band is greater than or equal to the predetermined threshold.

When any velocity response value is determined to be greater than or equal to the threshold (Yes in step S4), the output unit 105 in the seismic sensor 1 outputs a signal indicating that an earthquake greater than a predetermined magnitude has been detected (step S5). As described above, the output unit 105 may output signals for stopping the supply of energy such as gas or stopping the equipment, and may output a calculated spectrum intensity (SI) value.

After step S5 or when the velocity response value is determined to be lower than the predetermined threshold in step S4 (No in step S4), the processing returns to step S1 to repeat the earthquake sensing process.

In step S4, an acceleration may additionally be used in the earthquake determination. For example, a threshold is also set for the acceleration. When the response velocity and the acceleration both exceed their thresholds, the sensor may determine that an earthquake with at least a predetermined magnitude has occurred.

Advantageous Effects

The seismic sensor 1 according to the present embodiment may accurately detect an earthquake through earthquake sensing using a velocity response value. Additionally, the velocity in a specific frequency band may be used in the earthquake determination based on factors affecting the severity of earthquake damage, such as the natural frequency of a building.

Modifications

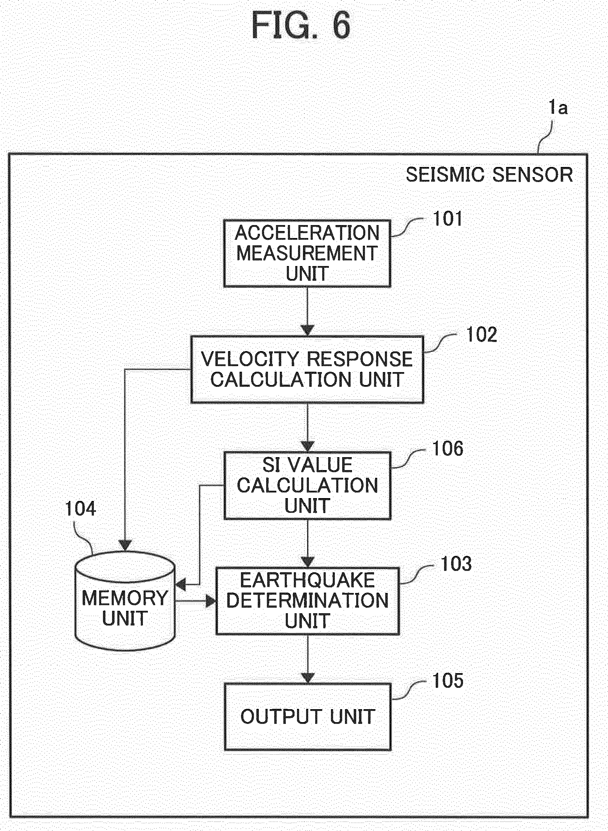

Fig. 6 is a functional block diagram of a seismic sensor according to a modification. A seismic sensor 1a shown in Fig. 6 differs from the seismic sensor 1 shown in Fig. 2 in including an SI value calculation unit 106. The SI value calculation unit 106 calculates an SI value, which is an assessment index indicating an earthquake magnitude. The other processing units are the same as in the above embodiment, and will not be described.

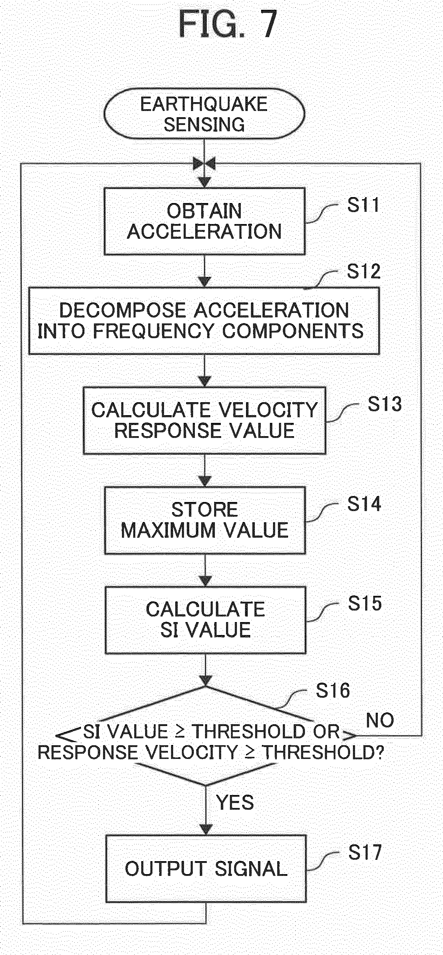

Fig. 7 is a flowchart showing an example process according to the modification. In the present modification, an SI value is calculated using the velocity response value calculated in the above embodiment. Steps S11 to S13 in Fig. 7 are the same as steps S1 to S3 in Fig. 3, and will not be described. The SI values may be calculated using any known method.

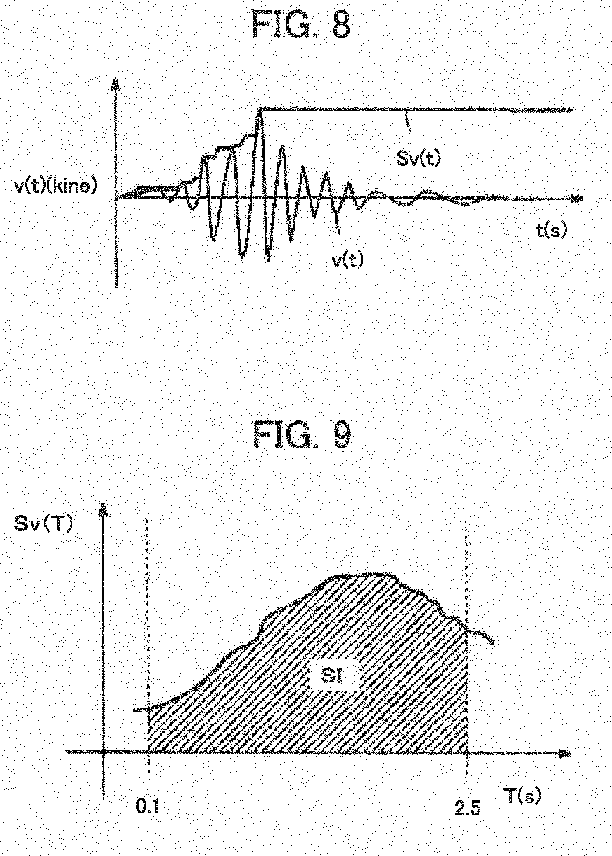

The velocity response calculation unit 102 stores the maximum value of the calculated velocity response values into the memory unit 104 (step S14). For example, the bold solid line shown in Fig. 8 indicates the maximum value Sv(t) (cm/s) of the velocity response values. The maximum value of the velocity response values is, for example, the maximum value of the velocity response values calculated within a certain period until the time of the processing. Fig. 9 shows an example of the spectral distribution of the maximum velocity response values for natural periods at a certain time. Fig. 9 is a graph showing the natural period T (s) on the horizontal axis and the maximum velocity response value Sv(T) (cm/s) on the vertical axis. The graph of Fig. 9 includes the natural periods within a range of 0.1 to 2.5 s. In step S14, the velocity response spectrum shown in Fig. 9 is calculated.

The SI value calculation unit 106 then calculates an SI value (step S15). The integral of the graph shown in Fig. 9 is divided by the interval of integration to calculate the average value of the velocity response spectrum. The resulting value is the SI value at the time. More specifically, the SI value may be calculated using Formula 1 below. Formula 1

$$SI = \frac{1}{2.4}\int_{0.1}^{2.5} Sv(T,h)\,dT \qquad \cdots (1)$$

This SI value is an indicator of the destructive power of an earthquake motion, which is the average of the integral of the velocity response spectrum ranging from 0.1 to 2.5 s. This range corresponds to the natural period of a highly rigid structure. In the formula, Sv is the velocity response spectrum, T is the period, and h is the attenuation coefficient.

The earthquake determination unit 103 in the seismic sensor 1 determines whether to output a signal indicating that an earthquake greater than a predetermined magnitude has been detected (step S16). More specifically, the earthquake determination unit 103 determines whether the SI value is greater than or equal to a predetermined first threshold and whether any of the velocity response values obtained for each frequency component resulting from the frequency decomposition is greater than or equal to a predetermined second threshold. In other words, the earthquake determination unit 103 determines whether each of the velocity response values calculated for all the frequency components within the above frequency band is greater than or equal to the second threshold.

When at least one of the SI value and the velocity response value is determined to be greater than or equal to the corresponding threshold (Yes in step S16), the output unit 105 in the seismic sensor 1 outputs a signal indicating that an earthquake greater than a predetermined magnitude has been detected (step S17). As described above, the output unit 105 may output signals for stopping the supply of energy such as gas or stopping the equipment, and may output the calculated SI value.

After step S17 or when the SI value and the velocity response value are each determined to be lower than the predetermined corresponding threshold in step S16 (No in step S16), the processing returns to step S1 to repeat the earthquake sensing process.

The present modification allows calculation of the SI value based on the velocity response values calculated in the above embodiment, and thus improves the accuracy of earthquake determination.

Other Modifications

In step S4 in Fig. 3 and step S16 in Fig. 7, the velocity response values calculated for all the frequency components within the frequency band are compared with the second threshold to determine whether any velocity response value is greater than or equal to the second threshold. In some embodiments, the velocity response values calculated for specific frequency components may be compared with the second threshold to determine whether any of the velocity response values is greater than or equal to the second threshold. For example, the velocity response value for a specific frequency corresponding to the natural period of the structure including the seismic sensor 1 may be compared with the threshold. This allows detection of vibrations including a predominant period that may cause resonance with the structure and thus damage to the structure. Each frequency may also have a threshold. This further improves the accuracy of earthquake determination.

REFERENCE SIGNS LIST

1    seismic sensor

101    acceleration measurement unit
102    velocity response calculation unit
103    earthquake determination unit
104    memory unit
105    output unit
106    SI value calculation unit

**Claims**

1. A seismic sensor configured to detect an earthquake with at least a predetermined magnitude and output a predetermined signal, the sensor comprising:

   an acceleration measurement unit configured to measure an acceleration applied to the seismic sensor;
   a velocity calculation unit configured to calculate a velocity response value using the acceleration measured by the acceleration measurement unit;
   an earthquake determination unit configured to determine whether the velocity response value is greater than or equal to a predetermined threshold; and
   an output unit configured to output the predetermined signal when the velocity response value is determined to be greater than or equal to the predetermined threshold.

2. The seismic sensor according to claim 1, wherein
   the velocity calculation unit calculates a velocity response value obtained by decomposing the acceleration into frequency components, and
   the earthquake determination unit determines whether the velocity response value calculated for a specific frequency is greater than or equal to a predetermined threshold set for the specific frequency.

3. The seismic sensor according to claim 1 or claim 2, wherein
   the earthquake determination unit further uses the acceleration measured by the acceleration measurement unit for determination.

4. The seismic sensor according to claim 2, wherein
   the predetermined threshold set for the specific frequency is a value that allows detection of a sine wave with a period of 0.3 seconds and a maximum acceleration of 250 gal.

5. An earthquake detection method implemented by a sensor module, the method comprising:

   measuring an acceleration;
   calculating a velocity response value using the acceleration;
   determining whether the velocity response value is greater than or equal to a predetermined threshold; and
   outputting a predetermined signal when the velocity response value is determined to be greater than or equal to the predetermined threshold.

# FIG. 1

SEISMIC SENSOR — 1

ACCELEROMETER — 11

MICROCONTROLLER — 12

MEMORY UNIT — 13

OUTPUT UNIT — 14

# FIG. 2

1

SEISMIC SENSOR

ACCELERATION MEASUREMENT UNIT — 101

VELOCITY RESPONSE CALCULATION UNIT — 102

104

MEMORY UNIT

EARTHQUAKE DETERMINATION UNIT — 103

OUTPUT UNIT — 105

# FIG. 3

```
      ┌─────────────────┐
      │   EARTHQUAKE     │
      │    SENSING       │
      └────────┬────────┘
               │
      ┌────────▼─────────────────────────────┐
      │        ┌──────────────────┐           │
      │        │     OBTAIN       │  S1       │
      │        │  ACCELERATION    │           │
      │        └────────┬─────────┘           │
      │                 │                     │
      │   ┌─────────────▼──────────────┐  S2  │
      │   │  DECOMPOSE ACCELERATION    │      │
      │   │ INTO FREQUENCY COMPONENTS  │      │
      │   └─────────────┬──────────────┘      │
      │                 │                     │
      │        ┌────────▼─────────┐  S3       │
      │        │ CALCULATE VELOCITY│          │
      │        │  RESPONSE VALUE   │          │
      │        └────────┬─────────┘           │
      │                 │            S4        │
      │          ◇──────▼──────◇   NO         │
      │         ╱ RESPONSE VELOCITY╲──────────┤
      │         ╲  ≥ THRESHOLD?    ╱           │
      │          ◇──────┬──────◇              │
      │                 │ YES                 │
      │        ┌────────▼─────────┐  S5       │
      │        │  OUTPUT SIGNAL   │           │
      │        └──────────────────┘           │
      └────────────────────────────────────────┘
```

# FIG. 4

y(t)(Gal)

t(s)

# FIG. 5

v(t)(kine)

t(s)

v(t)

# FIG. 6

SEISMIC SENSOR 1a

ACCELERATION MEASUREMENT UNIT 101

VELOCITY RESPONSE CALCULATION UNIT 102

SI VALUE CALCULATION UNIT 106

MEMORY UNIT 104

EARTHQUAKE DETERMINATION UNIT 103

OUTPUT UNIT 105

# FIG. 7

```
        ┌─────────────────────┐
        │  EARTHQUAKE         │
        │  SENSING            │
        └─────────────────────┘
                  │
        ┌─────────────────────┐
        │      OBTAIN         │  S11
        │   ACCELERATION     │
        └─────────────────────┘
                  │
   ┌───────────────────────────────┐
   │  DECOMPOSE ACCELERATION       │  S12
   │  INTO FREQUENCY COMPONENTS    │
   └───────────────────────────────┘
                  │
        ┌─────────────────────┐
        │  CALCULATE VELOCITY │  S13
        │   RESPONSE VALUE    │
        └─────────────────────┘
                  │
        ┌─────────────────────┐
        │      STORE          │  S14
        │  MAXIMUM VALUE      │
        └─────────────────────┘
                  │
        ┌─────────────────────┐
        │    CALCULATE        │  S15
        │    SI VALUE         │
        └─────────────────────┘
                  │
          SI VALUE ≥ THRESHOLD OR      S16
          RESPONSE VELOCITY ≥ THRESHOLD?  ── NO
                  │ YES
        ┌─────────────────────┐
        │   OUTPUT SIGNAL     │  S17
        └─────────────────────┘
```

# FIG. 8

# FIG. 9

| **INTERNATIONAL SEARCH REPORT** | International application No. |
| | PCT/JP2017/003183 |

| A. CLASSIFICATION OF SUBJECT MATTER |
| --- |
| *G01V1/00*(2006.01)i, *G01H1/00*(2006.01)i |

According to International Patent Classification (IPC) or to both national classification and IPC

| B. FIELDS SEARCHED |
| --- |
| Minimum documentation searched (classification system followed by classification symbols) |
| G01V1/00, G01H1/00 |

| Documentation searched other than minimum documentation to the extent that such documents are included in the fields searched |
| --- |
| Jitsuyo Shinan Koho    1922–1996    Jitsuyo Shinan Toroku Koho   1996–2017 |
| Kokai Jitsuyo Shinan Koho   1971–2017   Toroku Jitsuyo Shinan Koho   1994–2017 |

| Electronic data base consulted during the international search (name of data base and, where practicable, search terms used) |
| --- |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | JP 2006-208163 A  (Mitsutoyo Corp.), | 1-2,5 |
| Y | 10 August 2006 (10.08.2006), | 3-4 |
| | paragraphs [0011] to [0037] | |
| | (Family: none) | |
| | | |
| Y | JP 2013-200284 A  (Shimizu Corp.), | 3-4 |
| | 03 October 2013 (03.10.2013), | |
| | paragraph [0002] | |
| | (Family: none) | |
| | | |
| A | Noriko KATAOKA et al., "A simplified technique for estimation of response velocity spectra using displacement waves", Special report of Research Laboratory of Shimizu Construction Co., Ltd., 1990.10, no.52, pages 31 to 42 | 1-5 |

| ☒ | Further documents are listed in the continuation of Box C. | ☐ | See patent family annex. |
| --- | --- | --- | --- |

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 24 March 2017 (24.03.17) | 04 April 2017 (04.04.17) |

| Name and mailing address of the ISA/ | Authorized officer |
| --- | --- |
| Japan Patent Office | |
| 3-4-3,Kasumigaseki,Chiyoda-ku, | |
| Tokyo 100-8915,Japan | Telephone No. |

Form PCT/ISA/210 (second sheet) (January 2015)

**INTERNATIONAL SEARCH REPORT**

| International application No. |
| --- |
| PCT/JP2017/003183 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2001-42049 A  (Yamatake Corp.), 16 February 2001 (16.02.2001), entire text; all drawings (Family: none) | 1-5 |
| A | JP 2009-156743 A  (Osaka Gas Co., Ltd.), 16 July 2009 (16.07.2009), entire text; all drawings (Family: none) | 1-5 |
| A | JP 8-129071 A  (Tokyo Gas Co., Ltd.), 21 May 1996 (21.05.1996), entire text; all drawings (Family: none) | 1-5 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000205921 A